# EUROPEAN PATENT APPLICATION

(11) **EP 4 840 832 A1**
(43) Date of publication of application: **18.11.2026**
(21) Application number: 26173608.6
(22) Date of filing: 21.04.2026
(51) Int. Cl.: C03C 14/00, C04B 35/00

(54) **ROTORS AND ROTOR MATERIALS**

(30) Priority: 08.05.2025 US 202519202688
(71) Applicant: Ford Global Technologies, LLC, Dearborn, MI 48126-2701 (US)
(72) Inventor: KARPENKO, Yuri Anatoly, Brighton, 48114 (US); KIRNOS, Oleh, 49066 Dnipro (UA)
(74) Representative: Haseltine Lake Kempner LLP

(57) **Abstract**

A composite metal glass-ceramic rotor is provided. The composite metal glass-ceramic rotor includes a ceramic matrix of α-alumina and mullite reinforced with titanium diboride particles and interspersed with a metallic phase including aluminum, copper, titanium, and iron. The rotor is formed by initiating a self-propagating high-temperature synthesis reaction within a compacted powder blend to generate an in situ composite structure.

## Description

### TECHNICAL FIELD

The present disclosure relates to vehicle components.

### BACKGROUND

Disc braking systems for road vehicles commonly utilize rotors manufactured from gray cast iron material. This type of rotor has a microstructure with non-uniform segments of graphite, pearlite, and ferrite. Gray cast iron may be susceptible to corrosion and wear, in part because it is relatively soft compared to other alloys and composites.

### SUMMARY

A composite metal glass-ceramic rotor is provided. This rotor includes a glass-ceramic matrix of α-alumina and mullite and a reinforcing phase of in situ titanium diboride particles distributed within the matrix. The composite may further include an aluminum metal phase in an amount of 9-55% by weight, copper in an amount of 1-10% by weight, titanium in an amount of 0.5-6% by weight, and iron in an amount of 0.5-6% by weight. The titanium diboride particles may have an average particle thickness between 50 and 100 micrometers. The matrix may further include an aluminosilicate phase and oxides of alkali and alkaline earth metals, including sodium oxide, potassium oxide, calcium oxide, magnesium oxide, and yttrium oxide, as well as fluorides such as lithium fluoride and sodium hexafluoroaluminate, in a combined amount of 0.2 to 15% by weight. The mullite may form an interlocking fibrous network within the matrix. The rotor may have a total porosity of less than 5% and a bulk density between 2.3 and 4.0 g/cm³. The composite rotor may exhibit a flexural strength of at least 400 MPa and a crack resistance of at least 7.5 MPa·m^{0.5} at temperatures up to 1000 °C.

A method of manufacturing a composite metal glass-ceramic rotor is also provided. The method includes mixing metallic and oxide powders to form a reactive powder blend, the metallic powders including aluminum, copper, titanium, and iron in a combined amount of 10-60% by weight, and the oxide powders including titanium dioxide, silicon dioxide, and boron oxide in a combined amount of 40-90% by weight. The blend is compacted to form a green body, which is heated to initiate a self-propagating high-temperature synthesis reaction, resulting in the formation of titanium diboride, α-alumina, and mullite. The reaction product is then consolidated to form a dense composite. Consolidation may include applying pressure within 120 seconds after the synthesis reaction and may be performed at a pressure between 40 MPa and 60 MPa, while the reaction product remains in a semi-molten state. The resulting composite may have a porosity of less than 5% and a density between 2.3 and 4.0 g/cm³. The consolidation process may increase bonding between titanium particles and the glass-ceramic matrix. The final composite may exhibit a flexural strength of at least 400 MPa and a crack resistance of at least 7.5 MPa·m^{0.5}. The dense composite may include a friction surface region and a structural support region, both formed integrally during consolidation.

A composite metal glass-ceramic rotor is also provided comprising a ceramic matrix of α-alumina and mullite, a reinforcing phase of titanium diboride platelets embedded within the matrix, and a metallic phase of aluminum, copper, titanium, and iron interspersed throughout the ceramic matrix and titanium diboride platelets. The metallic phase may include aluminum in an amount of 9-55% by weight, copper in an amount of 1-10% by weight, titanium in an amount of 0.5-6% by weight, and iron in an amount of 0.5-6% by weight. The ceramic matrix may further include silicon dioxide and boron oxide forming an aluminoborosilicate glass phase integrated with the α-alumina and mullite. The rotor may have a density between 2.3 and 4.0 g/cm³, a flexural strength of at least 400 MPa, and a crack resistance of at least 7.5 MPa·m^{0.5}.

### BRIEF DESCRIPTION OF THE DRAWINGS

FIG. 1 is a scanning electron microscope image of a fractured surface of a composite metal-glass-ceramic material;
FIG. 2 is a schematic diagram of a structural layout of a composite material;
FIG. 3 shows a finished rotor blank;
FIG. 4 is an electron micrograph showing phase distribution in a composite rotor;
FIG. 5 is a perspective view of a rotor; and
FIG. 6 is a flowchart of a method to form a rotor material.

### DETAILED DESCRIPTION

Detailed embodiments are disclosed herein. These embodiments are merely examples and may be embodied in various and alternative forms. The figures are not necessarily to scale. Some features may be exaggerated or minimized to show details of particular components. Therefore, specific structural and functional details disclosed herein are not to be interpreted as limiting, but merely as a representative basis for teaching one skilled in the art.

The present disclosure relates to a composite metal-glass-ceramic material formed by self-propagating high-temperature synthesis (SHS) and to the use of this material in the manufacture of high-performance disc rotors and other friction components. The material has good thermal, mechanical, and tribological properties. These properties are a result of its composition and processing method, which together yield a multiphase composite incorporating metallic, ceramic, and glass-ceramic phases with controlled distribution and structure.

The development and integration of a SHS reaction, in which selected metal and oxide powders undergo an exothermic chemical transformation allows for formation of a dense, homogeneous composite. The primary SHS reaction is driven by an aluminothermic mechanism, represented stoichiometrically by the following equation:

3TiO₂ + 10Al + 3B₂O₃ → 3TiB₂ + 5Al₂O₃.

This reaction forms titanium diboride (TiB₂) as a primary reinforcing ceramic phase and alpha-phase aluminum oxide (Al₂O₃), also known as corundum, as a fundamental building block of the glass-ceramic matrix. The Al₂O₃ generated through the SHS reaction acts as a foundational component for the formation of more complex aluminosilicate and aluminoborosilicate structures, including mullite and mullite-corundum, which serve as matrix phases within the composite.

The metallic component of the composite is primarily based on aluminum (Al), which is selected for its favorable combination of low density, high thermal conductivity, corrosion resistance, and mechanical strength. In addition to Al, the metallic phase may include one or more of the following elements: copper (Cu), titanium (Ti), and iron (Fe). These alloying elements are incorporated into the metallic binder phase in weight ratios that depend on the intended application and desired mechanical and thermal properties. Copper, when combined with Al, contributes to the formation of eutectic phases such as Al-CuAl₂, which increases flexural strength and thermal stability. Titanium and iron function as strengthening agents and also increases the alloy's resistance to thermal cycling and oxidation. The metallic content in the composite, which is distinct from the Al consumed in the SHS reaction, generally ranges from 10% to 60% by weight, with Al being the majority of the metal fraction. For example, an effective metal phase composition may include 9% to 55% Al, 1% to 10% Cu, and 0.5% to 6% each of Ti and Fe.

The oxide portion of the composite formulation includes titanium dioxide (TiO₂) which acts as both a reactant in the SHS process and a high-melting ceramic oxide that contributes to the structural integrity of the composite. Boric acid (H₃BO₃) is used as the source of boron oxide (B₂O₃), which is released upon dehydration during a pre-reaction heating step. The B₂O₃ formed in situ reacts with Al and TiO₂ in the SHS process to yield TiB₂ and Al₂O₃. Silicon dioxide (SiO₂) is included in the mixture to form mullite and mullite-corundum phases when combined with Al₂O₃. These glass-ceramic matrix phases, particularly mullite (3Al₂O₃ 2SiO₂), contribute to thermal shock resistance, hardness, and chemical durability.

To further tailor the glass phase and increase sintering behavior, various modifying agents may be added. These include alkali silicates such as potassium silicate and sodium silicate, used to promote the formation of a continuous glassy matrix. Rare earth oxides (Re₂O₃), such as yttrium oxide (Y₂O₃), are added in small quantities (typically 0.1% to 2.5% by weight) to increase high-temperature stability and modify the viscosity of the glass phase. Alkaline earth oxides, including calcium oxide (CaO) and magnesium oxide (MgO), are included to affect crystallization behavior and densification. Fluorides such as lithium fluoride (LiF) and sodium hexafluoroaluminate (Na₃AlF₆) are also used to increase fluidity and glass formation during synthesis. These fluoride compounds serve the dual purpose of modifying the melt and promoting the formation of crystalline morphologies, such as needle-like mullite structures that reinforce the glass matrix.

Graphite, in the form of fine carbon particles, may be optionally included up to 7% by weight as a solid lubricant, when the composite is intended for pad linings. In some configurations, graphite is counted as part of the metallic component if it is intended to interact with the metal matrix during sintering. Additionally, the composition may include nitrate or carbonate salts of alkali and alkaline earth metals, such as potassium nitrate (KNO₃), sodium carbonate (Na₂CO₃), calcium nitrate (Ca(NO₃)₂), and others. These additives may control porosity, initiate SHS combustion, or contribute to matrix glass composition.

The SHS reaction determines the structure and properties of the final material. To initiate the SHS process, the oxide ingredients (excluding Al and Cu) are first mixed and heat-treated at 850 °C to 900 °C for four to five hours. This pre-treatment dehydrates boric acid, results in the formation of anhydrous boron oxide, and initiates partial fusion between SiO₂, B₂O₃, and other oxides, forming a glassy intermediate known as frit. The frit is then ground to a fine powder, typically with a particle size not exceeding 80 microns.

Separately, Al and Cu metal powders are prepared with a particle size below 100 microns and then mixed with the frit. The resulting blend of metallic and frit components is compacted into a mold, which may be fabricated from low-porosity graphite or another heat-resistant material, and whose inner surfaces are treated with a non-stick coating, such as zirconium oxide (ZrO₂) combined with calcium oxide (CaO). Compaction is performed at a pressure ranging from 40 megapascal (MPa) to 60 MPa.

The compacted powder body is then externally heated, usually by induction or resistance heating, to a temperature between 500 °C and 1100 °C. At this point, the SHS process is initiated by a localized ignition source or by incorporating a small amount of highly exothermic ignition material. Once initiated, the combustion wave propagates rapidly through the compact, reaching peak temperatures close to 2000 °C. This exothermic reaction results in the in situ formation of TiB₂ and Al₂O₃ while simultaneously sintering the surrounding matrix.

Following combustion, the compact remains under pressure for a brief isostatic holding period (typically less than 120 seconds) to maximize density and cohesion while the material cools below its softening point. After cooling, the solidified product is removed from the mold and may undergo surface finishing, such as machining, grinding, or drilling, to yield the final part.

The SHS reaction produces a dense, homogeneous composite structure. Scanning electron microscopy reveals a distribution of TiB₂ crystals embedded in a multiphase matrix. The metallic binder forms continuous or semi-continuous regions, facilitating pressure redistribution and thermal conductivity. The glass-ceramic phase includes amorphous and crystalline constituents, including mullite, mullite-corundum, and residual silicate glass. The TiB₂ particles, due to their hardness and fracture toughness, serve to mitigate crack propagation and reinforce the matrix. Mullite whiskers and plate-like phases further contribute to the mechanical integrity of the composite.

The final material has a density between 2.3 grams per centimeter cubed (g/cm³) and 4.0 g/cm³, depending on the selected porosity and constituent ratios. Porosity levels are typically below 5%, but may be increased up to 25% or even 40% when the composite is intended as a coating over a porous substrate. The flexural strength of the material is at least 150 MPa, and may exceed 250 MPa, or even reach and surpass 400 MPa. Fracture toughness is generally greater than 7.5 megapascals times the square root of meters (MPa·m^{0.5}). The thermal conductivity is increased by the metallic and TiB₂ content, achieving values up to 56.2 watts per meter-kelvin (W/m·K). The composite maintains its structural integrity up to 1100 °C and may be used in friction applications where the surface temperatures during braking exceed 1000 °C.

In one embodiment, a disc rotor is fabricated entirely from the composite. A 400 mm diameter, 40 mm thick rotor blank is formed through the SHS process and then finish-machined. In another embodiment, the composite is applied as a 5 mm thick surface layer over a porous substrate. A pre-coating of kaolin-based clay slurry is applied to seal the pores, followed by the application of the SHS-compatible composite slurry. After drying, the coated part is fired at 1250 °C to 1300 °C, allowing in situ SHS to form the dense, adherent surface layer.

The relative ratios among the metallic elements form their effect on thermal, mechanical, and tribological properties of the composite material. These ratios also affect the interaction of the composite with the surrounding glass-ceramic and ceramic reinforcement phases. For example, in a composition where the ratio of Al:Cu:Ti:Fe is 10:1:1:1, Al serves as the dominant phase contributing to ductility and thermal conductivity, while balanced additions of Cu, Ti, and Fe increase hardness, oxidation resistance, and high-temperature stability. Increasing the Cu content, as in a 10:2:1:1 or 10:5:1:1 ratio, promotes the formation of intermetallic phases such as CuAl₂, which strengthen the matrix through precipitation hardening and increase resistance to thermal fatigue. In a formulation with a ratio of 10:10:1:10, higher levels of both Cu and Fe are introduced to increase thermal conductivity, bulk hardness, and structural rigidity under high-load cycling. Conversely, a ratio of 10:1:10:1 introduces a greater Ti content, which increases compatibility with ceramic inclusions such as TiB₂, increases fracture resistance, and contributes to the formation of strong interfacial bonds within the composite. These controlled ratios allow the metallic phase to be tailored for specific application environments, whether prioritizing toughness, wear resistance, thermal management, or bonding strength with ceramic phases while maintaining the overall balance of the metal-glass-ceramic matrix. The composite material and its production process provide an alternative to silicon carbide composites.

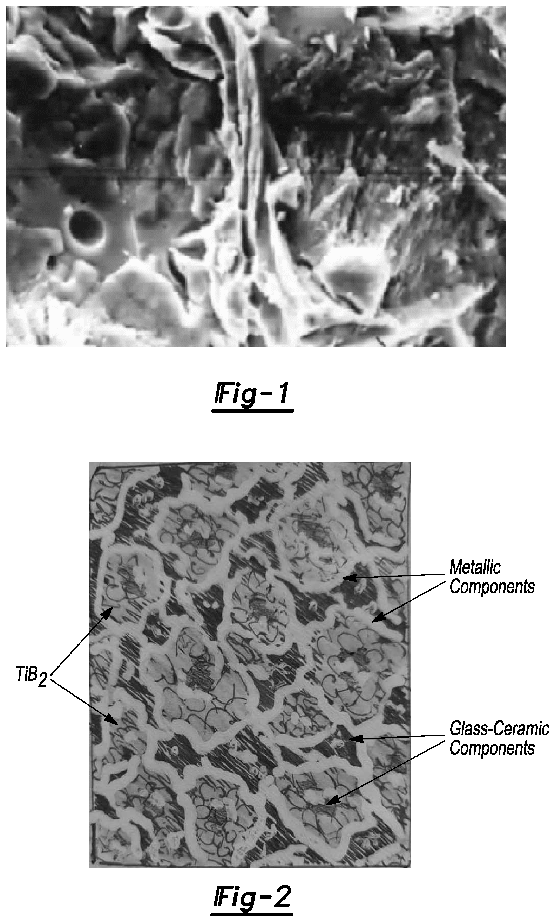

FIG. 1 shows a microstructure of a fractured surface of the composite material produced using the SHS method. As shown in the scanning electron microscope image, the distribution of crystals throughout the matrix is generally uniform, indicating that the reaction products, TiB₂ and Al₂O₃, were well integrated during the high-temperature synthesis. Two types of crystal morphologies are distinguishable in the matrix. The first type is intact crystals, which retain their original prismatic or plate-like structure, embedded securely in the surrounding matrix material. These are most likely unfractured TiB₂ inclusions or mullite-based crystalline whiskers that survived the thermal shock during synthesis and solidification. The second type is partially delaminated or distorted crystals that show signs of interfacial fracture and separation along their length, suggesting that tensile or shear pressures developed during cooling or fracture testing. The presence of mullite-based oxide fillers and TiB₂ particles is desirable, as their high hardness and rigidity prevent localized plastic deformation and instead promote distributed crack deflection, which contributes to the high fracture toughness observed in the composite.

FIG. 2 shows a schematic structural layout of the composite material. The oxide matrix, which includes mullite and mullite-corundum phases, is shows as a continuous phase, into which reinforcing TiB₂ particles and metallic regions are embedded. The amorphous glass phase is made primarily of SiO₂, B₂O₃, and Al₂O₃ and modifiers such as CaO, Na₂O, Li₂O, and fluorides like LiF and AlF₃, which occupy the space between crystalline components. The amorphous glass phase serves to bond the structural constituents together and accommodate thermal expansion mismatches between ceramic and metallic phases.

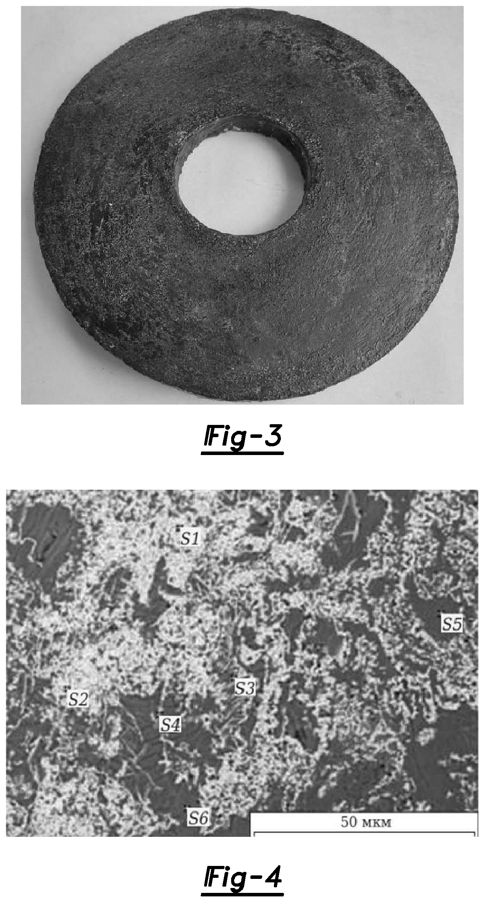

FIG. 3 shows a rotor blank fabricated using the SHS process. The rotor has a diameter of 400 mm and a thickness of 40 mm, which are representative dimensions for braking components in high-mass or high-speed vehicles such as freight railcars or performance automobiles. FIG. 3 demonstrates the feasibility of scaling the SHS process for use in full-scale components. The rotor blank was formed from a pre-compacted mixture of metallic and oxide powders, ignited in situ to propagate the SHS reaction throughout the mass. FIG. 3 shows the post-SHS form before or after final machining, such as grinding and drilling of ventilation holes or hub connections.

FIG. 4 shows a high-resolution micrograph of a composite structure from a rotor. The TiB₂ particles, labeled as S1 and S2, are dispersed throughout the matrix, with a range of morphologies from angular to elongated forms. These reinforcing particles contribute to the composite's hardness and erosion resistance. Metallic regions identified as S3, S4, and S5 appear embedded within the glass-ceramic matrix, forming interconnected or discrete ductile zones that help to absorb mechanical stresses during braking and mitigate crack propagation. The surrounding oxide matrix, labeled S6, is made of mullite and mullite-corundum phases, both crystalline and glassy, which contribute to the structural and thermal integrity of the composite. A small proportion of plate-shaped TiB particles, with thicknesses ranging from 50 to 100 microns, may be observed. These larger inclusions may arise from local variations in combustion intensity or particle agglomeration.

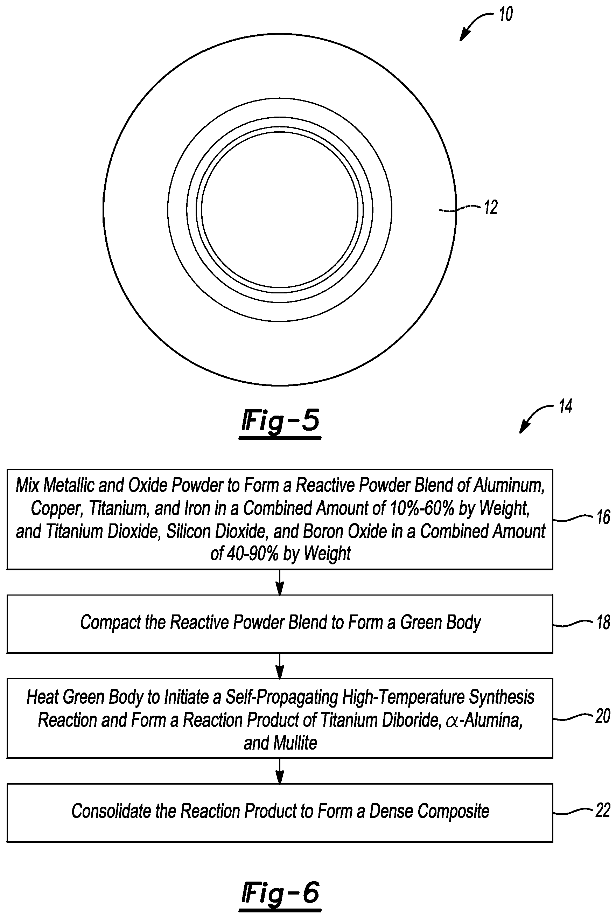

FIG. 5 shows a composite metal glass-ceramic rotor 10. The rotor 10 has a monolithic body shaped for use in a disc assembly and includes a composite metal-glass-ceramic material 12 having a glass-ceramic matrix of α-alumina and mullite with in situ titanium diboride reinforcement. The α-alumina, formed in situ during an SHS reaction, provides hardness, wear resistance, and thermal stability, while the mullite phase, which is formed by the reaction of α-alumina with silicon dioxide, contributes a fibrous, interlocking network that enhances crack resistance and thermal shock stability. TiB₂ particles are embedded directly within the α-alumina and mullite matrix and have an average thickness of approximately 50 to 100 micrometers. Their plate-like morphology and inherent hardness significantly increase the rotor's erosion resistance, fracture toughness, and high-temperature performance.

Interspersed within the glass-ceramic matrix and around the TiB₂ platelets is a metallic phase of Al, Cu, Ti, and Fe. The Al content may range from 9% to 55% by weight, and serves as the primary metallic binder. Cu is present in an amount between 1% and 10% by weight, contributing to strength and thermal conductivity through the formation of hard intermetallic phases. Ti and Fe are each present in amounts ranging from 0.5% to 6% by weight, increasing oxidation resistance and increasing the bond between the metallic and ceramic constituents. Together, these metals form a ductile and conductive phase that helps dissipate thermal gradients, accommodate localized strain, and mitigate crack propagation under cyclic mechanical and thermal loading.

The glass-ceramic matrix may also include an aluminoborosilicate glass phase formed by SiO₂ and BO₂, modified by oxides of alkali and alkaline earth metals such as NaO₂, KO₂, CaO₂, MgO₂, and Y₂O₃. Fluorides such as LiF and sodium Na₃AlF₆ may also be incorporated in a total combined amount of 0.2% to 15% by weight. These glass formers and modifiers help control viscosity during synthesis, assist in densification, and promote the nucleation and growth of crystalline phases such as mullite. Mechanically, the rotor 10 has a flexural strength of at least 400 MPa and a crack resistance of at least 7.5 MPa·m^{0.5}. These values are maintained at elevated operating temperatures, including up to 1000 °C.

FIG. 6 shows a flowchart of a method 14 for manufacturing a composite metal-glass-ceramic rotor using an SHS reaction. The process begins with step 16, in which metallic and oxide powders are mixed to form a reactive powder blend. The metallic component includes Al, Cu, Ti, and Fe in a combined amount of 10-60% by weight. The oxide component includes TiO₂, SiO₂, and BO₂ in a combined amount of 40-90% by weight. In step 18, the reactive powder blend is compacted into a green body. The compaction process increases particle contact, reducing void space and ensuring uniform density. In step 20, the green body is heated to initiate the SHS reaction. The applied heat triggers an exothermic reduction-oxidation reaction, in which the aluminum reduces the TiO₂ and BO₂ to form Ti2BO₂, while simultaneously generating α-alumina and promoting the crystallization of mullite from the alumina and silicon dioxide. This reaction rapidly propagates through the compacted material, reaching temperatures close to 2000 °C, allowing for in situ formation of the composite structure. The resulting material is a dense matrix of α-alumina and mullite reinforced with dispersed Ti2BO₂ particles.

Following the completion of the SHS reaction, step 22 involves consolidating the reaction product to form a dense composite. Step 22 may include applying pressure within 120 seconds of the SHS reaction completion. The pressure is maintained within the range of 40 MPa to 60 MPa while the reaction product remains in a semi-molten state. This process increases the densification of the composite, reducing porosity to less than 5% and achieving a final density between 2.3 and 4.0 g/cm³. The consolidation also strengthens the interface between the titanium diboride reinforcement phase and the surrounding glass-ceramic matrix.

While example embodiments are described above, it is not intended that these embodiments describe all possible forms. Rather, the words used in the specification are words of description rather than limitation, and it is understood that various changes may be made without departing from the spirit and scope of the concepts contemplated. Additionally, the features of various implementing embodiments may be combined to form further embodiments.

According to the present invention, a vehicle component is provided having: a composite metal glass-ceramic rotor including a glass-ceramic matrix of α-alumina and mullite, and a reinforcing phase of in situ titanium diboride particles within the glass-ceramic matrix of α-alumina and mullite.

According to an embodiment, the composite metal glass-ceramic rotor includes an aluminum metal phase in an amount of 9-55% by weight, copper in an amount of 1-10% by weight, titanium in an amount of 0.5-6% by weight, and iron in an amount of 0.5-6% by weight.

According to an embodiment, the titanium diboride particles have an average particle thickness between 50 and 100 micrometers.

According to an embodiment, the glass-ceramic matrix includes an aluminosilicate phase.

According to an embodiment, the composite metal glass-ceramic rotor includes oxides of alkali and alkaline earth metals selected from sodium oxide, potassium oxide, calcium oxide, magnesium oxide, and yttrium oxide, and fluorides including lithium fluoride and sodium hexafluoroaluminate, in a combined amount of 0.2 to 15 percent by weight.

According to an embodiment, the mullite forms an interlocking fibrous network within the glass-ceramic matrix.

According to an embodiment, the composite metal glass-ceramic rotor has a total porosity of less than 5% and a bulk density between 2.3 and 4.0 grams per cubic centimeter.

According to an embodiment, the composite metal glass-ceramic rotor has a flexural strength of at least 400 MPa and a crack resistance of at least 7.5 MPa·m^{0.5} at temperatures up to 1000 °C.

According to the present invention, a method of manufacturing a composite metal glass-ceramic rotor includes: mixing metallic and oxide powder to form a reactive powder blend of aluminum, copper, titanium, and iron in a combined amount of 10-60% by weight, and titanium dioxide, silicon dioxide, and boron oxide in a combined amount of 40-90% by weight; compacting the reactive powder blend to form a green body; heating the green body to initiate a self-propagating high-temperature synthesis reaction and form a reaction product of titanium diboride, α-alumina, and mullite; and consolidating the reaction product to form a dense composite.

In one aspect of the invention, the consolidating includes applying pressure within 120 seconds after the self-propagating high-temperature synthesis reaction.

In one aspect of the invention, the consolidating is performed at a pressure between 40 MPa and 60 MPa.

In one aspect of the invention, the consolidating is performed while the reaction product remains in a semi-molten state.

In one aspect of the invention, the dense composite has a porosity of less than 5% and a density between 2.3 and 4.0 g/cm³.

In one aspect of the invention, the consolidating increases bonding between titanium particles and a glass-ceramic matrix.

In one aspect of the invention, the dense composite has a flexural strength of at least 400 MPa and a crack resistance of at least 7.5 MPa·m^{0.5}.

In one aspect of the invention, the dense composite includes a friction surface region and a structural support region, both formed integrally during the consolidating.

According to the present invention, a vehicle component is provided having: a composite metal glass-ceramic rotor including a ceramic matrix of α-alumina and mullite, a reinforcing phase of titanium diboride platelets embedded within the ceramic matrix, and a metallic phase of aluminum, copper, titanium, and iron interspersed within the ceramic matrix and embedded titanium diboride platelets.

According to an embodiment, the metallic phase includes aluminum in an amount of 9-55% by weight, copper in an amount of 1-10% by weight, titanium in an amount of 0.5-6% by weight, and iron in an amount of 0.5-6% by weight.

According to an embodiment, the ceramic matrix includes silicon dioxide and boron oxide forming an aluminoborosilicate glass phase integrated with the α-alumina and mullite.

According to an embodiment, the composite metal glass-ceramic rotor has a density between 2.3 and 4.0 g/cm³, a flexural strength of at least 400 MPa, and a crack resistance of at least 7.5 MPa·m^{0.5}.

## Claims

1. A vehicle component comprising:
a composite metal glass-ceramic rotor including a glass-ceramic matrix of α-alumina and mullite, and a reinforcing phase of in situ titanium diboride particles within the glass-ceramic matrix of α-alumina and mullite.

2. The vehicle component of claim 1 wherein the composite metal glass-ceramic rotor includes an aluminum metal phase in an amount of 9-55% by weight, copper in an amount of 1-10% by weight, titanium in an amount of 0.5-6% by weight, and iron in an amount of 0.5-6% by weight.

3. The vehicle component of claim 1 wherein the titanium diboride particles have an average particle thickness between 50 and 100 micrometers.

4. The vehicle component of claim 1 wherein the glass-ceramic matrix includes an aluminosilicate phase.

5. The vehicle component of claim 1 wherein the composite metal glass-ceramic rotor includes oxides of alkali and alkaline earth metals selected from sodium oxide, potassium oxide, calcium oxide, magnesium oxide, and yttrium oxide, and fluorides including lithium fluoride and sodium hexafluoroaluminate, in a combined amount of 0.2 to 15 percent by weight.

6. The vehicle component of claim 1 wherein the mullite forms an interlocking fibrous network within the glass-ceramic matrix.

7. The vehicle component of claim 1 wherein the composite metal glass-ceramic rotor has a total porosity of less than 5% and a bulk density between 2.3 and 4.0 grams per cubic centimeter.

8. The vehicle component of claim 1 wherein the composite metal glass-ceramic rotor has a flexural strength of at least 400 MPa and a crack resistance of at least 7.5 MPa·m^{0.5} at temperatures up to 1000 °C.

9. A method of manufacturing a composite metal glass-ceramic rotor comprising:
mixing metallic and oxide powder to form a reactive powder blend of aluminum, copper, titanium, and iron in a combined amount of 10-60% by weight, and titanium dioxide, silicon dioxide, and boron oxide in a combined amount of 40-90% by weight;
compacting the reactive powder blend to form a green body;
heating the green body to initiate a self-propagating high-temperature synthesis reaction and form a reaction product of titanium diboride, α-alumina, and mullite; and
consolidating the reaction product to form a dense composite.

10. The method of claim 9 wherein the consolidating includes applying pressure within 120 seconds after the self-propagating high-temperature synthesis reaction.

11. The method of claim 9 wherein the consolidating is performed at a pressure between 40 MPa and 60 MPa.

12. A vehicle component comprising:
a composite metal glass-ceramic rotor including a ceramic matrix of α-alumina and mullite, a reinforcing phase of titanium diboride platelets embedded within the ceramic matrix, and a metallic phase of aluminum, copper, titanium, and iron interspersed within the ceramic matrix and embedded titanium diboride platelets.

13. The vehicle component of claim 12 wherein the metallic phase includes aluminum in an amount of 9-55% by weight, copper in an amount of 1-10% by weight, titanium in an amount of 0.5-6% by weight, and iron in an amount of 0.5-6% by weight.

14. The vehicle component of claim 12 wherein the ceramic matrix includes silicon dioxide and boron oxide forming an aluminoborosilicate glass phase integrated with the α-alumina and mullite.

15. The vehicle component of claim 12 wherein the composite metal glass-ceramic rotor has a density between 2.3 and 4.0 g/cm³, a flexural strength of at least 400 MPa, and a crack resistance of at least 7.5 MPa·m^{0.5}.
